# EUROPEAN PATENT SPECIFICATION

(11) **EP 3 247 219 B1**
(45) Date of publication and mention of the grant of the patent: **25.12.2024**
(21) Application number: 16740570.3
(22) Date of filing: 19.01.2016
(51) Int. Cl.: A23J 1/02, A23J 1/14, A23J 3/26, A23P 30/20, A23P 20/10, A23J 3/16, A23L 33/185

(54) **EXTRUDED PROTEIN PRODUCT AND METHODS OF MAKING**
EXTRUDIERTE PROTEINPRODUKTE UND VERFAHREN ZUR HERSTELLUNG
PRODUIT PROTÉIQUE EXTRUDÉ ET PROCÉDÉS DE PRODUCTION

(30) Priority: 19.01.2015 US 201514599763
(43) Date of publication of application: 29.11.2017
(73) Proprietor: General Mills, Inc., Minneapolis, MN 55426 (US)
(72) Inventor: WALTHER, Goeran, Plymouth, MN 55447 (US); ROBIE, Steven, C., Plymouth, MN 55447 (US); WRIGHT, Kevin, H., Crystal, MN 55427 (US); LAFAVOR, Joel, R., Minnetonka, MN 55345 (US); HECK, Caleb Ian, Champlin, MN 55316 (US)
(74) Representative: Vossius & Partner Patentanwälte Rechtsanwälte mbB
(86) International application number: PCT/US2016/013854
(87) International publication number: WO 2016/118479

(56) References cited:
- WO-A1-03/000063
- WO-A1-2013/192284
- WO-A1-2016/150834
- WO-A1-95/16368
- WO-A2-2011/011456
- US-A- 4 579 749
- US-A- 4 627 985
- US-A- 4 978 544
- US-A- 5 665 419
- US-A1- 2006 073 261
- US-A1- 2008 102 165
- US-A1- 2009 155 447
- US-A1- 2012 093 994
- US-B1- 7 419 695
- US-B2- 8 778 442

## Description

### TECHNOLOGY

The present disclosure generally relates to an extruded protein product and methods of making such a product.

### BACKGROUND

High protein food products have found popularity among consumers as a way to eat nutritionally dense foods. US 2009/0155447 relates to food materials containing a high concentration of vegetable protein and omega-3 fatty acids and processes for their manufacture. Consumers want diverse ways to get increased protein into their diets. Thus, there is a need for new high protein food products to satisfy the increasing consumer desire for protein.

### SUMMARY

The present invention relates to a composition comprising extruded pieces according to claim 1, a method of making a protein product according to claim 10 and a method of making a food composition according to claim 20. Provided in the present application is a composition including extruded pieces. The extruded pieces include protein in an amount of 30% to 90% by weight, a protein matrix disruptive ingredient in an amount of from 5% to 50% by weight, oil in an amount of from 2% to 20% by weight, water in an amount of from 1.5% to 8% by weight, and inclusions in an amount of from 0% to 50% by weight. The oil can be substantially uniformly distributed throughout the extruded pieces.

In some embodiments, the extruded pieces can have protein granules within, or surrounded by, a matrix that includes the protein matrix disruptive ingredient. The protein granules can have a substantially non-linearly oriented protein matrix, or the protein granules can have regions of a linearly oriented protein matrix. The protein granules can have an average size greater than 75 µm.

In some embodiments, the extruded pieces can have a texture analysis measurement of from 1000 g to 7400 g force, or from 2000 g to 5000 g force, and a density of from 0.7 g/cc to 1.0 g/cc.

The extruded pieces can have a rough and/or uneven surface.

The protein can include one or a combination of soy protein, whey protein, bean protein, pea protein, wheat protein, canola protein, or algae protein.

In some embodiments, the protein matrix disruptive ingredient can be a non-protein component of a protein concentrate or a protein isolate.

In some embodiments, the protein matrix disruptive ingredient can be a flour or a syrup. In some embodiments, the protein matrix disruptive ingredient can include a starch, a sugar, or a fiber.

In some embodiments, extruded pieces can have a protein content of 45-70%, or 60-70%, by weight and have a cold water hydration rate of from 1.6 to 1.9, or from 1.7 to 1.9.

In some embodiments, extruded pieces can have a protein content of 45-70%, or 60-70%, by weight and have a hot water hydration rate of from 2.0 to 2.8, or from 2.5 to 2.8.

In some embodiments, extruded pieces can have a protein content of 40-65% by weight and have a cold water hydration rate of from 2.1 to 2.7.

In some embodiments, extruded pieces can have a protein content of 40-65% by weight and have a hot water hydration rate of from 3.0 to 3.75.

In some embodiments, the inclusions can be one or a combination of nuts, seeds, fruit, grains, or coconut. In some embodiments, the extruded pieces can have inclusions substantially uniformly distributed throughout the extruded pieces.

In some embodiments, extruded pieces can include one or more colorant or flavorant. In some embodiments, extruded pieces can have a marbled appearance.

The oil can be substantially uniformly distributed throughout the extruded pieces.

In some embodiments, the extruded pieces can have a sugar-based coating, a fat-based coating, or a protein-based coating.

In some embodiments, an extruded piece can be adhered with one or more edible component to form a cluster. In some embodiments, an extruded piece can be adhered to one or more additional extruded piece to form a cluster. In some embodiments, an extruded piece can be adhered with one or more edible component to form a bar.

A food product is also provided herein. A food product includes food product pieces and extruded pieces having protein in an amount of 30% to 90% by weight, a protein matrix disruptive ingredient in an amount of from 5% to 50% by weight, oil in an amount of from 2% to 20% by weight, water in an amount of from 1.5% to 8% by weight, and inclusions in an amount of from 0% to 50% by weight.

A composition is provided herein including particulates derived from extruded pieces, where the extruded pieces have protein in an amount of 30% to 90% by weight, a protein matrix disruptive ingredient in an amount of from 5% to 50% by weight, oil in an amount of from 2% to 20% by weight, water in an amount of from 1.5% to 8% by weight, and inclusions in an amount of from 0% to 50% by weight. The particulates can be coated on a food product or formed into a food product.

A food product or kit is provided herein. The food product or kit includes a first food component and at least a second food component, where the first food component includes extruded pieces having protein in an amount of 30% to 90% by weight, a protein matrix disruptive ingredient in an amount of from 5% to 50% by weight, oil in an amount of from 2% to 20% by weight, water in an amount of from 1.5% to 8% by weight, and inclusions in an amount of from 0% to 50% by weight.

A method of making a food product is also provided herein. The method includes processing, under extrusion conditions, a powdered protein ingredient comprising at least 45% protein by weight of the powdered protein ingredient and a protein matrix disruptive ingredient combined with water and an oil to form a protein matrix composition having a protein content of from 10% to 65% by weight, a moisture content of from 25% to 55% by weight and an oil content of from 1% to 15% by weight, and forming the protein matrix composition into pieces to form the food product.

In some embodiments, the protein product can include protein granules within, or surrounded by, a matrix that includes the protein matrix disruptive ingredient. The protein granules can have a substantially non-linearly oriented protein matrix, or the protein granules can have regions of a linearly oriented protein matrix. The protein granules can have an average size greater than 75 µm.

The extrusion conditions can include a specific mechanical energy (SME) of from 8 Wh/kg to 100 Wh/kg, a die pressure of from 10.3 bar (150 PSI) to 68.9 bar (1000 PSI), and/or a die temperature of from 93.3 °C (200 °F) to 176.7 °C (350° F).

In some embodiments, the powdered protein ingredient includes at least a portion of the protein matrix disruptive ingredient.

In some embodiments, the protein matrix disruptive ingredient can be a flour or a syrup. In some embodiments, the protein matrix disruptive ingredient can include a starch, a sugar, or a fiber.

The method can further include drying the protein matrix composition pieces to a moisture content of from 1.5% to 8% by weight to form extruded pieces. In some embodiments, extruded pieces have a texture analysis measurement of from 1000 g to 7400 g force, or from 2000 g to 5000 g force, and a density of from 0.7 g/cc to 1.0 g/cc. In some embodiments, the oil is substantially uniformly distributed throughout the pieces.

In some embodiments, the method can further include applying a sugar-based or protein-based coating to the extruded pieces to form coated pieces and drying the coated pieces.

In some embodiments, the method can further include applying a fat-based coating to the extruded pieces to form coated pieces and cooling the coated pieces.

In some embodiments, the method can further include comminuting the extruded pieces to form particulates. The method can further include producing a food product including the particulates and/or coating a food product with the particulates.

In some embodiments, the method can further include processing inclusions with the powdered protein ingredient, protein matrix disruptive ingredient, water, and oil. The inclusions can include one or a combination of nuts, seeds, fruit, grains, or coconut.

A method of making a food composition is also provided. The method includes hydrating extruded pieces that have protein in an amount of 30% to 90% by weight, a protein matrix disruptive ingredient in an amount of from 5% to 50% by weight, oil in an amount of from 2% to 20% by weight, water in an amount of from 1.5% to 8% by weight, and inclusion in an amount of 0% to 50% by weight to form a first food component, and combining the first food component with at least a second food component to make the food composition.

In some embodiments, the extruded pieces can be formulated to perform as a substitute for bacon bits or as a substitute for ground meat.

In some embodiments, the second food component can be a noodle component, a potato component, an oil-in-water emulsion, and/or a seasoning component.

In some embodiments, the food composition is a pasta dish, a salad, a potato dish, or a soup.

A method of making a frozen or refrigerated food product is provided. The method includes combining a first food component of extruded pieces with at least a second food component to make the frozen or refrigerated food product. The extruded pieces include protein granules with an average size greater than 75 µm within a matrix comprising a protein matrix disruptive ingredient, a protein content of from 10% to 65% by weight, a moisture content of from 25% to 55% by weight and an oil content of from 1% to 15% by weight, the oil being substantially uniformly distributed throughout the extruded pieces.

In some embodiments, the frozen or refrigerated food product is a frozen or refrigerated pizza or a frozen or refrigerated pasta product.

In some embodiments, the extruded pieces can be formulated to perform as a substitute for bacon bits or as a substitute for ground meat.

A frozen or refrigerated food product is provided herein. The frozen or refrigerated food product includes extruded pieces that have protein granules with an average size greater than 75 µm within a matrix comprising a protein matrix disruptive ingredient, a protein content of from 10% to 65% by weight, a moisture content of from 25% to 55% by weight and an oil content of from 1% to 15% by weight, the oil being substantially uniformly distributed throughout the extruded pieces.

In some embodiments, the frozen or refrigerated food product can also include a second food component, such as a crust component, a sauce component, and/or a noodle component.

In some embodiments, the frozen or refrigerated food product is a frozen or refrigerated pizza or a frozen or refrigerated pasta product.

In some embodiments, the extruded pieces can be formulated to perform as a substitute for bacon bits or as a substitute for ground meat.

These and various other features and advantages will be apparent from a reading of the following detailed description.

### BRIEF DESCRIPTION OF THE DRAWINGS

Figure 1 includes macroscopic images of the surfaces of an extruded piece according to one embodiment (Fig. 1A), a piece that does not include oil (Fig. 1B), two commercially available textured vegetable protein products (Figs. 1C and 1D), and two commercially available puffed soy protein crisps (Figs. 1E and 1F).
Figure 2 includes macroscopic images of cross sections of an extruded piece according to one embodiment (Fig. 2A), a piece that does not include oil (Fig. 2B), two commercially available textured vegetable protein products (Figs. 2C and 2D), and two commercially available puffed soy protein crisps (Figs. 2E and 2F).
Figure 3 includes light micrographs of an extruded piece according to one embodiment (Fig. 3A), a piece that does not include oil (Fig. 3B), two commercially available textured vegetable protein products (Figs. 3C and 3D), and two commercially available puffed soy protein crisps (Figs. 3E and 3F).
Figure 4 includes confocal micrographs of an extruded piece according to one embodiment (Fig. 4A), a piece that does not include oil (Fig. 4B), two commercially available textured vegetable protein products (Figs. 4C and 4D), and two commercially available puffed soy protein crisps (Figs. 4E and 4F).
Figure 5 is a polarized light micrograph of an extruded piece having inclusions according to another embodiment.
Figure 6 includes macroscopic images of the surfaces of a textured vegetable protein-based imitation bacon bit (TVP imitation bacon bits, left image) and an extruded piece according to an embodiment disclosed herein (right image) that is suitable for use as a bacon bit replacement.
Figure 7 includes light micrographs of a TVP imitation bacon bit (left image) and an extruded piece according to an embodiment disclosed herein (right image) that have been stained to visualize protein.
Figure 8 includes macroscopic images of the surfaces of a textured vegetable protein-based imitation bacon bit (TVP imitation bacon bits, left image) and an extruded piece according to an embodiment disclosed herein (right image) that is suitable for use as ground beef replacement following hydration.
Figure 9 includes light micrographs of a TVP imitation bacon bit (left image) and an extruded piece according to an embodiment disclosed herein (right image) that have been stained to visualize protein.

### DETAILED DESCRIPTION

Extrusion technology has begun to produce protein products that have an enjoyable texture, while reducing or eliminating the use of animal protein. Many of these products are designed to mimic whole or ground meat and are meant to be eaten in place of meat. However, consumers expect an even greater variety of high protein foods that are suitable for different eating occasions. As described herein, a new protein product has been produced having a high protein content and having an enjoyable texture and flavor that is suitable for a wide variety of eating occasions.

A protein product provided herein can be a composition comprising extruded pieces. Extruded pieces described herein comprise protein, a protein matrix disruptive ingredient, oil, and water. In some embodiments, extruded pieces provided herein include inclusions.

Extruded pieces provided herein comprise protein in an amount of 30% to 90% (e.g., 50% to 75%) by weight. The amount and type of protein included in extruded pieces described herein can be selected to produce a protein matrix when extruded in the presence of water and an oil. In some embodiments, the amount and type of protein can be selected to produce extruded pieces that have functions for different eating occasions. For example, in some embodiments, extruded pieces that are formulated for eating as a breakfast cereal without requiring substantial hydration can have a protein content of from 30% to 60% (e.g., from 40% to 55%). In another example, extruded pieces that are formulated to perform as a substitute for ground meat, such as ground beef or ground turkey, and intended to be hydrated and heated for consumption can have a protein content of from 50% to 90% (e.g., from 45% to 70%, oi 60% to 70%). In another example, extruded pieces that are formulated to perform as a substitute for bacon bits, which may or may not be hydrated and/or heated prior to consumption can have a protein content of from 30% to 70% (e.g., from 40% to 65%).

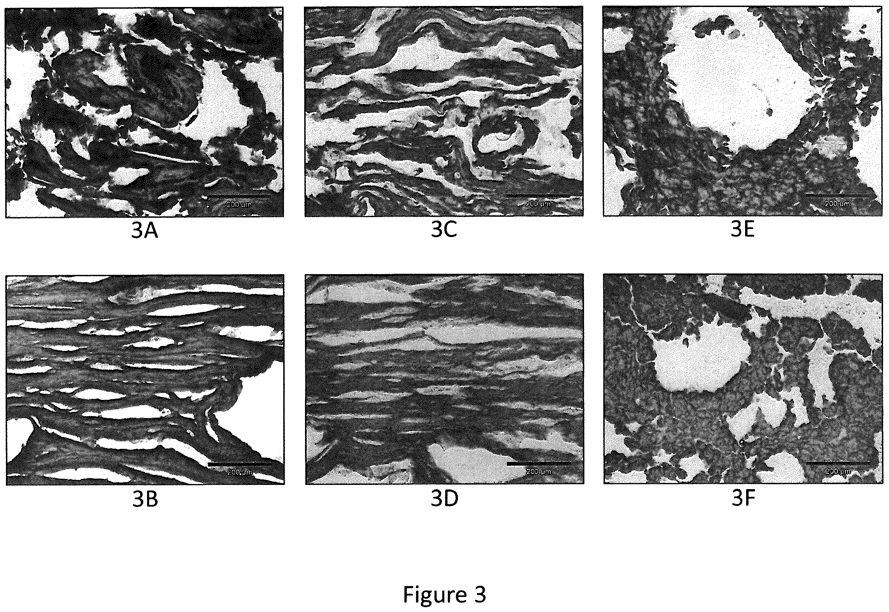

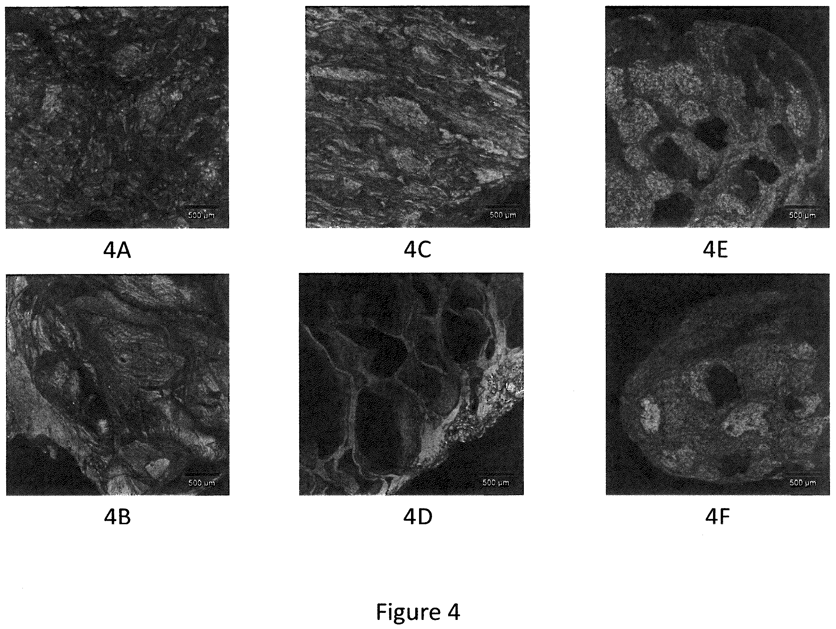

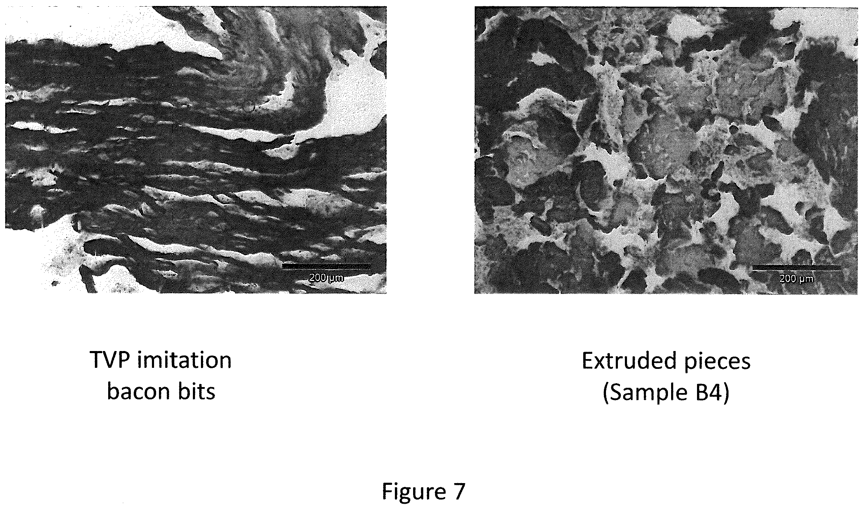

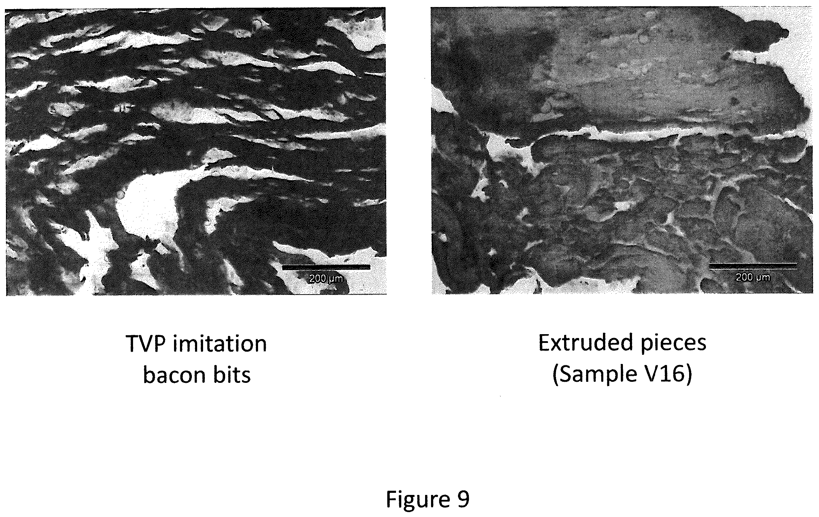

As illustrated in Figs. 3A and 4A, the right image in Fig. 7, and the right image in Fig. 9, an extruded piece provided herein can have granules of compacted protein within, or surrounded by, a matrix that includes protein matrix disruptive ingredient. As used herein, the term "protein granule" refers to a particle of compacted protein. The protein granules can range from having a protein matrix that is substantially non-linearly oriented to a protein matrix that has localized regions of linear orientation that is relatively non-fibrous. This is in contrast to an extruded product, such as textured vegetable protein (shown in Figs. 3C, 3D, 4C, 4D, the left image in Fig. 7 and the left image of Fig. 9), having a substantially entirely linearly oriented protein matrix with elongated, fibrous strands rather than granules of protein. Another example of an extruded product that has a substantially entirely linearly oriented protein matrix includes an extruded piece that does not contain oil, as illustrated in Figs. 3B and 4B.

When compared to extruded soy crisps, as shown in Figs. 3E, 3F, 4E, and 4F, which have small agglomerations of protein that are 50 µm across or less, protein granules of an extruded piece provided herein can be relatively large, averaging at least 75 µm across (e.g., on average, at least 100 µm across). Without being bound to theory, it is believed that relatively large protein granules within, or surrounded by, a matrix that includes a protein matrix disruptive ingredient can contribute to a desired texture of an extruded piece provided herein, whether dry or hydrated with hot or cold water, an aqueous solution, or an oil-in-water emulsion (e.g., mayonnaise).

Protein suitable for use in an extruded piece includes plant-based protein (e.g., soy protein, pea protein, wheat protein, oat protein, bean protein, canola protein, lentil protein, chickpea protein, broccoli protein, and the like), microbe-based protein (e.g., algae protein, bacterial protein, and the like), fungal protein (e.g., yeast protein, mushroom protein, and the like), and animal-based protein (e.g., dairy protein, egg protein, insect protein, and the like). In some embodiments, a protein can be selected to produce a desired characteristic. For example, soy, pea, or bean protein, or the like, can be selected to exclude grain-based ingredients, or whey protein can be selected to produce extruded pieces having a crunchier texture. Other characteristics can include, for example, GMO-free, gluten-free, soy-free, and/or allergen free. In some embodiments, blends of proteins can be used in extruded pieces provided herein.

In some embodiments, a protein with a specific functional property can be used. In some embodiments, a protein can be derived from its source (e.g., a plant, animal, or microorganism) without altering the structure and related functional properties. In other embodiments, the chemical structure and functional properties of a protein can be altered during and/or after derivation from its source. For example, a soy protein concentrate or isolate with high water binding properties can be used to achieve a desired texture.

Extruded pieces also comprise a protein matrix disruptive ingredient in an amount of from 5% to 50% (e.g., 15% to 40%) by weight. As used herein, the term "protein matrix disruptive ingredient" refers to one or a combination of a flour (e.g., a grain flour, a legume flour, a vegetable or fruit powder, cocoa, or the like), a starch (e.g., tapioca starch, corn starch, a modified starch, a pregelatinized starch, or the like), a sugar (e.g., sucrose, fructose, lactose, or the like), a fiber (e.g., sugar cane fiber, inulin, oat fiber, pea fiber, bran, hull fiber, or the like), a polyol (e.g., glycerol or the like), syrups (e.g., corn syrup, tapioca syrup, honey, or the like), or the like. In some embodiments, a protein matrix disruptive ingredient can include a non-protein component of a protein rich flour (e.g., a soy flour, a pea flour, a lentil flour, or a bean flour), a protein concentrate, or a protein isolate. Without being bound by theory, it is believed that a protein matrix disruptive ingredient disrupts the protein matrix in an extruded piece provided herein to contribute to a desired texture, desired hydration properties, and/or protein matrix structure of the extruded piece.

A protein matrix disruptive ingredient can be selected, for example, in order to provide a desired nutritional profile, flavor, sweetness, and/or texture to an extruded piece that contains the protein matrix disruptive ingredient. For example, oat hull fiber can be selected to produce extruded pieces having a desired fiber content, or a syrup can be selected to adjust texture and/or taste. In some embodiments, a protein matrix disruptive ingredient can be selected to provide a desired characteristic for an extruded piece, such as being grain-free, gluten-free, GMO-free, soy-free, and the like. For example, tapioca flour or starch can be selected to produce a grain-free extruded piece.

Extruded pieces provided herein include oil in an amount of from 2% to 20% (e.g., 2% to 15%) by weight. Oil in an extruded piece provided herein can be distributed substantially uniformly throughout the piece. This is in contrast to known textured vegetable protein products, which generally are made from defatted or low fat ingredients and do not contain oil or only residual amounts of oil (e.g., less than 2% by weight), or if oil is present, it is found mainly near the surface as a surface treatment of the textured vegetable protein. For example, oil spraying is commonly used to topically apply seasoning or flavor to textured vegetable protein products. The disclosed extruded pieces also contrast to puffed protein products currently available (e.g., soy crisps), which generally contain substantially no oil in the matrix.

Any edible oil is suitable for use in an extruded piece provided herein. Preferably, an oil included in an extruded piece is liquid at room temperature. Suitable oils include, without limitation, canola oil, olive oil, soy oil, sunflower oil, corn oil, and the like. An oil to be included in an extruded piece can be selected based on, for example, nutritional profile, compatibility with extrusion process and/or equipment, texture and/or mouthfeel imparted to the extruded piece, and/or price.

Extruded pieces described herein include water in an amount of from 1.5% to 8% (e.g., 1.5% to 6%) by weight. The amount of water in an extruded piece is generally selected in order to provide shelf stability and/or a desired texture to the extruded piece. A lower water content can be selected to increase shelf life of an extruded piece. In some embodiments, a higher water content can be selected in order to reduce the hardness of an extruded piece. Water content can also be selected to maintain solubility of one or more ingredients, such as an antioxidant, in an extruded piece.

In some embodiments, extruded pieces provided herein include inclusions up to 50% by weight. As used herein, the term "inclusion" refers to a substantially solid edible particle. An inclusion is visually (i.e., macroscopically) distinguishable from the protein matrix of an extruded piece. Inclusions, when included in an extruded piece, are substantially uniformly distributed throughout the piece. Examples of inclusions include, without limitation, nut pieces, whole grain pieces, seeds and/or seed pieces, fruit pieces, coconut, confection pieces, and the like.

One or more additional ingredients can be included in or on the surface of extruded pieces provided herein. An additional ingredient can be selected to impart a desired nutritional profile, flavor, sweetness, texture, shelf life, and/or visual appearance to an extruded piece, or to provide an advantage to the production process of an extruded piece. For example, one or more flavorant, such as vanilla extract or a spice, can be included in or on the surface of an extruded piece to provide a desired sweet or savory flavor. In another example, one or more colorants can be included in or on the surface of an extruded piece to provide an appearance similar to ground meat or bacon bits, such as a marbled appearance.

Examples of additional ingredients that can be included in an extruded piece include, without limitation, flavorants, nutritive and/or non-nutritive sweeteners, salts, colorants, antioxidants, vitamins, and/or minerals, and the like.

Extruded pieces provided herein can have a texture analysis measurement of from 1000 g to 7400 g (e.g., from 1000 g to 5600 g, or from 2000 g to 5000 g) force. As used herein, the term "texture analysis measurement" refers to an average 50% strain force of 10 replicate measurements in g obtained from the following protocol: a single piece is placed on the stage of a TA.HD*Plus* Texture Analyzer (Texture Technologies, Massachusetts, USA) and subjected to a 50% strain test at a speed of 2 mm/second using a 50 kg load cell and a 1 inch (2.54 cm) cylindrical stainless steel probe.

The extruded pieces according to the present invention have a density of from 0.7 g/cc to 1.0 g/cc (e.g. from 0.8 g/cc to 0.9 g/cc). As used herein, density is measured by the displacement of granular sodium chloride. About 150 cc of sodium chloride is placed in a 250 ml graduated cylinder and tapped in a tap density analyzer 300x. The volume of salt is recorded to the nearest cc. The salt is then removed from the cylinder. The salt is poured back into the cylinder in 10-20 cc aliquots alternating with pieces of a known weight of extruded pieces until the volume is approximately 150 cc. The remaining salt is then placed in the cylinder. The cylinder is again tapped 300x in the tap density analyzer. The volume is recorded and the particle density of each sample is calculated as the weight of the sample divided by the difference in tapped volume with and without sample present.

Extruded pieces provided herein can absorb water at a rate that contributes to a desired eating experience. Water absorption rate is measured herein by cold water hydration rate and hot water hydration rate. As used herein, cold water hydration rate is measured by combining 20 g of a sample of extruded pieces with 200 g water at 19.4 °C (67° F), and allowed to sit at room temperature for 10 minutes. The extruded pieces are then drained for 30 seconds using a strainer and the mass of the drained pieces are measured. The cold water hydration rate is calculated by dividing the mass of the drained extruded pieces divided by the mass of the extruded pieces prior to combination with water (20 g). As used herein, hot water hydration rate is measured by combining 20 g of a sample of extruded pieces with 200 g boiling water, which are then covered and allowed to sit at room temperature for 5 minutes. The extruded pieces are then drained for 30 seconds using a strainer, and the mass of the drained pieces is measured. The hot water hydration rate is calculated in the same way the cold water hydration rate is calculated (i.e., mass of drained extruded pieces/20g). Cold water hydration rates for extruded pieces described herein can be 1.5 or greater (e.g., from 1.5 to 5), while hot water hydration rates can be 2 or greater (e.g., from 2 to 4). Cold and hot water hydration rates can be adjusted as desired for different eating experiences. For example, an extruded piece suitable for use as a bacon bit substitute can have a cold water hydration rate from 2.1 to 2.7, or a hot water hydration rate of from 3.0 to 3.75. In another example, an extruded piece suitable for use as a ground meat substitute can have a cold water hydration rate from 1.6 to 1.9 (e.g., from 1.7 to 1.9), or a hot water hydration rate of from 2.0 to 2.8 (e.g., from 2.5 to 2.8).

In some embodiments, extruded pieces provided herein can have a rough or uneven surface. A rough surface can provide a visually interesting appearance to extruded pieces. In some embodiments, inclusions can contribute to a rough or uneven surface of an extruded piece.

In some embodiments, extruded pieces can have average diameter of from about 2 mm to 15 mm (e.g., from 5 mm to 10 mm). The size of an extruded piece can be adjusted for the desired use of the extruded piece or to provide a manufacturing advantage. For example, the size of an extruded piece can be adjusted to provide a desired size for eating as a stand-alone snack. In another example, the size of an extruded piece can be adjusted to result in a desired drying time during manufacturing. Piece size can be adjusted using known methods, such as die size and/or die shape selection, rate of extrusion, and/or cutter speed.

Extruded pieces can be produced by processing, under extrusion conditions, a powdered protein ingredient and a protein matrix disruptive ingredient with sufficient water and an oil to form a protein matrix composition. As used herein, the term "extrusion conditions" refers to subjecting components to heat, pressure, and shear in an extruder. Extrusion conditions can include applying sufficient specific mechanical energy (SME) (e.g., at least 8 Wh/kg, or from 10 Wh/kg to 100 Wh/kg, 10 Wh/kg to 50 Wh/kg, or from 15 Wh/kg to 35 Wh/kg) to produce extruded pieces having a desired protein matrix. In some embodiments, extrusion conditions can comprise a die temperature of at least 93.3 °C (200° F) (e.g., from 93.3 °C (200° F) to 176.7 °C (350° F), or from 121.1 °C (250° F) to 148.9 °C (300° F). As used herein, the term "die temperature" refers to the temperature of a protein matrix composition inside the die of an extruder just before exiting the die. In some embodiments, extrusion conditions can comprise a die pressure of at least 10.3 bar (150 PSI) (e.g., from 10.3 bar (150 PSI) to 68.9 bar (1000 PSI), 13.8 bar (200 PSI) to 41.4 bar (600 PSI), or from 17.2 bar (250 PSI) to 24.1 bar (350 PSI). As used herein, the term "die pressure" refers to the pressure a protein matrix composition is exposed to inside the die of an extruder just before exiting the die.

A powdered protein ingredient, as used herein, is an edible dry ingredient comprising at least 45% protein (e.g., at least 50%, at least 70%, or at least 90%) by weight. Examples of powdered protein ingredients include, without limitation, flours having a protein content of at least 45% (e.g., defatted soy flour), protein concentrates (e.g., soy protein concentrate, pea protein concentrate, whey protein concentrate, and the like), protein isolates (e.g., soy protein isolate, pea protein isolate, whey protein isolate, and the like), pure proteins, and combinations thereof. A powdered protein ingredient can be included in an amount sufficient to produce a protein matrix composition having a protein content of 10% to 65% (e.g., 15% to 50%) protein by weight of the protein matrix composition.

In some embodiments, a powdered protein ingredient can comprise a protein matrix disruptive ingredient. For example, a protein concentrate or a protein isolate can include, for example, starch, sugar, fiber, and/or inorganic components, and the like. In some embodiments, all or part of the protein matrix disruptive ingredient can be combined with powdered protein ingredient, water, and oil as a separate ingredient.

Water and oil are combined with the powdered protein ingredient, protein matrix disruptive ingredient, and optional inclusions and/or other ingredients in amounts sufficient to form a protein matrix composition having a moisture content of from 25% to 55% by weight and an oil content of from 1% to 15% by weight. Water can be provided in any appropriate form. For example, tap or filtered water, fruit or vegetable juice, or the like, can be used to provide the desired moisture content. In some embodiments, water and oil can be provided as an emulsion for combination with the powdered protein ingredient, protein matrix disruptive ingredient, and optional inclusions and/or other ingredients.

It has been discovered that incorporating oil into a protein matrix composition results in extruded pieces that have a structure that includes granules of protein loosely packed in a matrix that includes a protein matrix disruptive ingredient that imparts a desirable texture. The addition of too much oil (e.g., more than 15% by weight) results in incomplete incorporation of the oil. It has also been discovered that too little water addition (i.e., less than 25% by weight) can result in oil being squeezed from the protein matrix composition, which alters the texture of extruded pieces and/or interferes with the proper function of extruder equipment. However, it has also been discovered that the addition of too much water (i.e., more than 55% by weight) can result in extruded pieces that are harder than desired or have an undesired even surface appearance. It has further been discovered that incorporation of water and oil into a protein matrix composition allows for the incorporation of inclusions that are visually distinguishable from protein matrix rather than being crushed or degenerated during extrusion at low water and/or low or no oil conditions such that inclusions remain visually indistinguishable.

The amounts of oil and/or water combined with a powdered protein ingredient and protein matrix disruptive ingredient can be adjusted in order to result in a desired appearance and/or texture of extruded pieces. As the amount of oil is increased, extruded pieces generally appear rougher and have a crunchier texture. As the amount of water is increased, extruded pieces generally appear smoother and have a harder texture.

The amounts of oil and/or water combined with a powdered protein ingredient and protein matrix disruptive ingredient can also be adjusted in order to adjust the amount of shear a protein matrix composition is subjected to. Generally, higher amounts of water and/or oil reduce the amount of shear that a protein matrix composition is subjected to. In some embodiments, higher water and/or oil can be used to make extruded pieces with relatively large inclusions.

In some embodiments, dry ingredients, such as a powdered protein ingredient, a protein matrix disruptive ingredient, inclusions and/or other optional components, can be combined prior to combining with water and/or oil under extrusion conditions. In some embodiments, components can be added stepwise or at essentially the same time before combining under extrusion conditions.

Extruders suitable for use in the methods provided herein can include, for example, a single screw, twin, or triple screw extruder, or a ring extruder. For example a co-rotating, intermeshing, twin screw extruder can be used in a method provided herein. Manufacturers for co-rotating twin screw extruders include, for example, Coperion, Wenger, Clextral, Bersttorf, APV, Buhler, and Leistritz. Manufacturers for single screw extruders include, for example, Wenger, APV, and Buhler.

A protein matrix composition can be formed into pieces using any suitable method to form protein matrix composition pieces. For example, a protein matrix composition can passed through an extrusion die and then cut in order to form pieces. During formation, the amount of turbulence or laminar flow that a protein matrix composition is exposed to in the extruder die prior to exiting the extruder die can be adjusted to result in protein granules that include regions of linear oriented protein matrix (less turbulence), or protein granules that include substantially non-linearly oriented protein matrix (more turbulence) as desired. Turbulence can be increased in an extrusion die by, for example, including a static mixer, or by introducing small, large or multiple variations in die cross section diameter or shape.

Following formation, protein matrix composition pieces can be dried to form extruded pieces using any appropriate method to reach a moisture content of from 1.5% to 8% to form extrude pieces. For example, protein matrix composition pieces can be subjected to heated air in order to dry them to the desired moisture content.

In some embodiments, extruded pieces provided herein can be packaged and sold as a food product without any other components. Such packaged extruded pieces can be intended to be eaten as a food product alone or in combination with other food products. For example, extruded pieces can be packaged and sold as a stand alone snack, as part of a ready-to-eat breakfast cereal, or can be used as a topping for yogurt or oatmeal, as a bacon bit substitute, or as a hydratable ground meat crumble substitute as part of a dry meal kit. Extruded pieces provided herein can have a texture suitable such that they need not be further prepared for eating by, for example, heating or soaking. However, in some embodiments, it is to be understood that an individual may enjoy heating and/or soaking extruded pieces provided herein during various eating occasions, such as when combined with oatmeal, when used as a ground meat substitute (e.g., in a pasta or a taco or burnto), when used in a soup, when used as a bacon bit substitute in hot foods (e.g., in a potato dish, such as mashed potatoes), or when used hydrated or partially-hydrated in a chilled or ambient temperature food, such as a pasta salad.

In some embodiments, extruded pieces provided herein can be combined with other food components to produce a food product. For example, extruded pieces can be combined with food product pieces, such as ready to eat (RTE) cereal pieces or popcorn, to produce a food product having desired protein content. In another example, extruded pieces can be combined with dried fruit and/or nuts to produce a snack mix type product or a granola type product.

In some embodiments, extruded pieces provided herein can be packaged into a kit with other food products. For example, extruded pieces can be combined as a kit with yogurt, which can be combined prior to eating. Other examples of kits that can include the extruded pieces described herein include, without limitation, taco kits (e.g., including seasoning and/or taco shells or tortillas), pasta kits (e.g., including noodles), instant potato kits (e.g., mashed or potatoes au gratin), instant soup kits, and the like.

In some embodiments, an extruded piece can be adhered with one or more edible component, such as another extruded piece, nut pieces, fresh or dried fruit pieces, seeds, coconut, grain, and the like, to form a cluster. An extruded piece and one or more edible component can be adhered to each other using any appropriate method and ingredients (e.g., edible binders and the like). For example, a cluster can be produced using a combination of an extruded piece and rolled oats adhered using a honey-based binder or slurry. Clusters can be provided as a food product alone or as part of a food product, such as a snack mix, ready to eat cereal, or oatmeal mix.

In some embodiments, an extruded piece can be adhered with one or more edible component in a similar manner to a cluster described above, and formed into a snack or breakfast bar. Such a snack bar can be crunchy or chewy, sweet or savory.

In some embodiments, extruded pieces provided herein can be comminuted into particulates (i.e., having an average diameter of less than 2 mm) to produce a composition derived from extruded pieces that resembles crumbs or a powder. Such particulates can be used, for example, to coat food products, such as ready to eat cereal pieces, snack food pieces, and the like. In some embodiments, particulates derived from extruded pieces provided herein can be combined with other components and formed into a food product, such as ready to eat cereal pieces, snack food pieces, baked goods, and the like. In some embodiments, particulates derived from extruded pieces disclosed herein can be used in addition to, or to partially or completely replace, protein ingredients, such as soy protein concentrate, in other food products where a high protein content is desired.

In some embodiments, following formation, protein matrix composition pieces can be either partially dried (e.g., to a moisture greater than 8%) or left undried (e.g., at a moisture level of from 25% to 55%) and frozen or refrigerated. Such frozen or refrigerated protein matrix composition pieces can be packaged as-is as a ground meat substitute or bacon bit substitute, or combined with one or more additional food components to produce a frozen or refrigerated food product, such as a frozen or refrigerated pizza or frozen or refrigerated pasta product.

It is to be understood that extruded pieces provided herein can be used for either sweet or savory applications. Extruded pieces disclosed herein can provide a benefit of being a high protein stand-alone food product or provide added protein in combination with other components in food products while also providing an improved flavor and/or texture over other known high protein pieces, such as textured vegetable protein or puffed protein crisps.
The composition of the present invention is defined in claim 1. In this composition the extruded pieces may comprise a rough and/or uneven surface. The composition of the present invention is defined in claim 1. In this composition the protein may comprise soy protein. The composition of the present invention is defined in claim 1. In this composition the protein may comprise whey protein, bean protein, pea protein, wheat protein, canola protein, or algae protein. The composition of the present invention is defined in claim 1. In this composition the protein matrix disruptive ingredient may comprise a flour or a syrup. The composition of the present invention is defined in claim 1. In this composition the protein matrix disruptive ingredient may comprise a non-protein component of a protein concentrate or a protein isolate. The composition of the present invention is defined in claim 1. In this composition the protein matrix disruptive ingredient may comprise a starch, a sugar, or a fiber. The composition of the present invention is defined in claim 1. In this composition the inclusions may comprise nuts, seeds, fruit, grains, or coconut.
The present invention is further defined by a food product comprising the composition as defined in claim 1 and food product pieces. The present invention is further defined by a composition comprising particulates derived from extruded pieces, which extruded pieces are defined in claim 1. These particulates may be coated on a food product. Furthermore, these particulates may be formed into a food product. The present invention is further defined by a food product or kit comprising the composition as defined in claim 1 as a first food component, the food product or kit further comprising a second food component. In a preferred embodiment the present invention is defined by a method of claim 12. In this method, the protein product may include protein granules that have a substantially non-linearly oriented protein matrix. Furthermore, in this method the protein product may include protein granules that have regions of a linearly oriented protein matrix.
A method of the present invention is defined in claim 11. In this method the protein matrix disruptive ingredient may comprise a flour or a syrup. Furthermore, in this method the protein matrix disruptive ingredient may comprise a starch, a sugar or a fiber. In a preferred embodiment the present invention is defined by a method of claim 17. In this method the extruded pieces may have a texture analysis measurement of from 2000 g to 5000 g force. A method of the present invention is defined in claim 11. This method may further comprise processing inclusions with the powdered protein ingredient, protein matrix disruptive ingredient, water, and oil. Preferably the inclusions may comprise nuts, seeds, fruit, grains, or coconut. A method of the present invention is defined in claim 22. In this method the extruded pieces may be formulated to perform as a substitute for bacon bits. Preferably the second food component may be selected from a noodle component and a potato component. In this method as disclosed in claim 22 the extruded pieces may be formulated to perform as a substitute for ground meat. Preferably the second food component may be selected from a noodle component and a seasoning component.

### EXAMPLES

### Example 1

Formulations including soy protein isolate (SPI), flour (F), sugar (S), oil (O), water (W), and flavor (R) according to Table 1 (SPI, F, S, and R are shown as % weight of dry ingredients and O and W are shown as % weight of protein matrix composition) were combined in a Buhler BCTL-42 extruder (Buhler Inc., Minnesota, USA) to form a protein matrix composition. The protein matrix composition was extruded through a single hole die having a diameter of 0.159 inches (4mm) and cut to form protein matrix composition pieces approximately 5 mm to 10 mm. The pieces were dried using tray dryer to a moisture content of 1.5% to 8% to form extruded pieces.

**Table 1**

| **Sample** | **SPI** | **F** | **S** | **O** | **W** | **R** | **SME (Wh/kg)** | **Die** (° **F)** | **temp.** °C | **Die (PSI)** | **press**.bar |
|---|---|---|---|---|---|---|---|---|---|---|---|
| **1** | **75** | **20** | **4** | **5.4** | **59.8** | **0.6** | **9.6** | **248** | 120 | **152** | 10.5 |
| **2** | **75** | **20** | **4** | **6.5** | **50.4** | **0.6** | **15.4** | **253** | 123 | **199** | 13.7 |
| **3** | **75** | **20** | **4** | **7.8** | **40.4** | **0.6** | **24.6** | **265** | 129 | **297** | 20.5 |
| **4** | **75** | **20** | **4** | **9.0** | **30.7** | **0.6** | **27.9** | **274** | 134 | **330** | 22.8 |
| **5** | **75** | **20** | **4** | **0** | **33.7** | **0.6** | **82.6** | **313** | 156 | **810** | 55.9 |
| **6** | **75** | **20** | **4** | **3.5** | **56.6** | **0.6** | **14.9** | **257** | 125 | **193** | 13.3 |
| **7** | **75** | **20** | **4** | **4.4** | **46.7** | **0.6** | **17.1** | **262** | 128 | **273** | 18.8 |
| **8** | **75** | **20** | **4** | **5.2** | **36.6** | **0.6** | **24.5** | **275** | 135 | 411 | 28.3 |
| **9** | **75** | **20** | **4** | **1.8** | **37.9** | **0.6** | **32.1** | **284** | 140 | **506** | 34.9 |
| **10** | **75** | **20** | **4** | **1.5** | **48.2** | **0.6** | **20.0** | **275** | 135 | **320** | 22.1 |
| **11** | **75** | **20** | **4** | **1.2** | **58.0** | **0.6** | **14.5** | **259** | 126 | **213** | 14.7 |
| **12** | **65** | **30** | **4** | **6.5** | **50.1** | **0.6** | **12.6** | **256** | 124 | **194** | 13.4 |
| **13** | **65** | **30** | **4** | **7.8** | **40.3** | **0.6** | **18.3** | **263** | 128 | **294** | 20.3 |
| **14** | **65** | **30** | **4** | **9.0** | **30.7** | **0.6** | **19.9** | **274** | 134 | **305** | 21.0 |
| **15** | **65** | **30** | **4** | **5.9** | **27.6** | **0.6** | **23.9** | **282** | 139 | **377** | 26.0 |
| **16** | **65** | **30** | **4** | **5.6** | **31.8** | **0.6** | **23.1** | **282** | 139 | **412** | 28.4 |
| **17** | **65** | **30** | **4** | **4.8** | **41.7** | **0.6** | **19.9** | **272** | 133 | **337** | 23.2 |
| **18** | **65** | **30** | **4** | **1.6** | **43.0** | **0.6** | **25.1** | **275** | 135 | **370** | 25.5 |
| **19** | **65** | **30** | **4** | **1.9** | **33.1** | **0.6** | **46.2** | **288** | 142 | **547** | 37.7 |
| **20** | **65** | **30** | **4** | **2.1** | **2** | **0.6** | **47.8** | **291** | 144 | **571** | 39.4 |

Formulations were attempted using 25% moisture or less, but oil separated during extrusion.

Extruded pieces were eaten to determine acceptability of texture for consumption without further preparation (Table 2). Extruded pieces produced using a protein matrix composition having 55% moisture or greater were identified as having an unacceptable hardness when consumed. In addition, extruded pieces produced using a protein matrix composition having 55% moisture or greater exhibited a smooth, even surface. Extruded pieces produced using a protein matrix composition having no added oil resembled TVP and were relatively hard.

The protein content in extruded pieces from each of the samples was measured (as % weight) using the Dumas method. Overall fat content (as % weight) was measured by gas chromatography. Moisture content of extruded pieces was also measured by subjecting the extruded pieces to a vacuum oven at 70° C for 16 hours. Protein, fat, and moisture content are shown in Table 2.

**Table 2**

| **Sample** | **Measured protein (% wt)** | **Measured fat (% wt)** | **Moisture (% wt)** | **Acceptable texture for consumption** |
|---|---|---|---|---|
| 1 | 58.5 | 13.2 | 6.7 | **No** |
| 2 | 61.4 | 13.9 | 2.3 | **Yes** |
| 3 | 61.9 | 13.4 | 1.9 | **Yes** |
| 4 | 61.6 | 12.3 | 2.9 | **Yes** |
| 5 | 65.7 | 1.9 | 7.8 | **No (TVP-like)** |
| 6 | 63.6 | 10.7 | 3.7 | **No** |
| 7 | 63.6 | 9.5 | 4.0 | **Yes** |
| 8 | 63.4 | 10.6 | 4.2 | **Yes** |
| 9 | 67.9 | 6.3 | 2.3 | **Yes** |
| 10 | 67.4 | 4.9 | 2.9 | **Yes** |
| 11 | 67.4 | 5.0 | 3.8 | **No** |
| 12 | 55.7 | 14.6 | 2.1 | **Yes** |
| 13 | 54.7 | 13.1 | 4.0 | **Yes** |
| 14 | 53.8 | 12.1 | 4.0 | **Yes** |
| 15 | 56.3 | 9.0 | 4.6 | **Yes** |
| 16 | 56.7 | 9.4 | 3.8 | **Yes** |
| 17 | 57.0 | 10.1 | 3.2 | **Yes** |
| 18 | 59.9 | 5.7 | 3.5 | **Yes** |
| 19 | 60.5 | 4.3 | 3.0 | **Yes** |
| 20 | 60.6 | 4.4 | 3.4 | **Yes** |

Texture analysis measurements were obtained for extruded pieces from each sample. Extruded pieces from each sample individually placed on the stage of a TA.HD*Plus* Texture Analyzer (Texture Technologies, Massachusetts, USA) and subjected to a 50% strain test at a speed of 2 mm/second using a 50 kg load cell and a 1 inch (2.54 cm) cylindrical stainless steel probe. The average 50% strain force of 10 replicates determined that acceptable extruded pieces identified in Table 2 had texture analysis measurements from 400 g to 6600 g force, with texture analysis measurements greater than 1000 g force being more preferred. Texture analysis measurements taken for a variety of commercially available textured vegetable protein (TVP) products, sold as meat analog, substitute, or imitation, ranged from 7400 g to 9000 g force, while a variety of commercially available soy crisps ranged from 1300 g to 1400 g force. Many available TVP products are considered to be too hard to be enjoyable to eat without soaking in a liquid first.

Particle density measurements were obtained for extruded pieces from each sample. Extruded pieces from each sample were analyzed for density by the displacement of granular sodium chloride. Briefly, about 150 cc of sodium chloride was placed in a 250 ml graduated cylinder and tapped in a tap density analyzer 300x. The volume of salt was recorded to the nearest cc. The salt was then removed from the cylinder. The salt was poured back into the cylinder in 10-20 cc aliquots alternating with pieces of a known weight of sample until the volume was approximately 150 cc. The remaining salt was then placed in the cylinder. The cylinder was again tapped 300x in the tap density analyzer. The volume was recorded and the particle density of each sample was calculated as the weight of the sample divided by the difference in tapped volume with and without sample present. The average particle density for acceptable extruded pieces (see, Table 2) ranged from 0.7 g/cc to 1.0 g/cc, with densities from 0.8 g/cc to 0.9 g/cc being more preferred. Densities of a variety of TVP products ranged from 0.7 g/cc to 0.8 g/cc, while commercially available soy crisps ranged from 0.4 g/cc to 0.5 g/cc. Thus, while acceptable extruded pieces had a similar density to commercially available TVP products, texture was somewhat reduced to result in a product that provides a better eating experience than a TVP product without prior hydration.

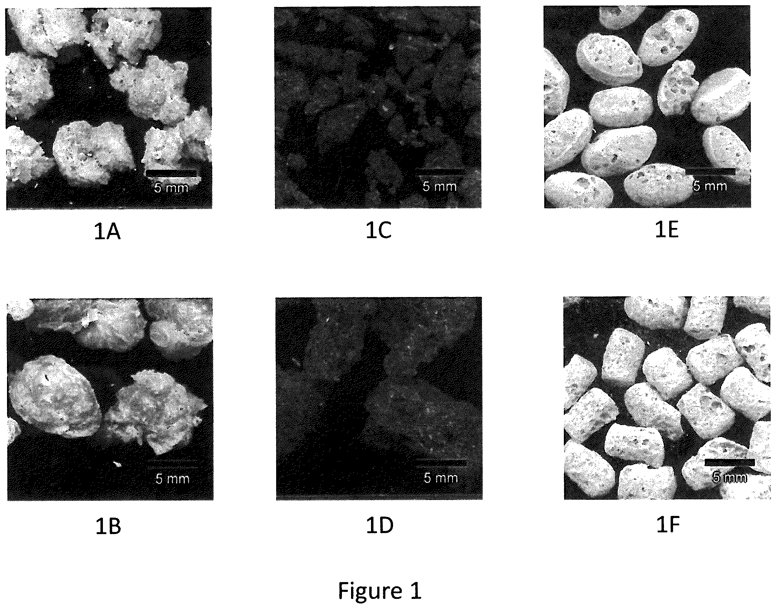

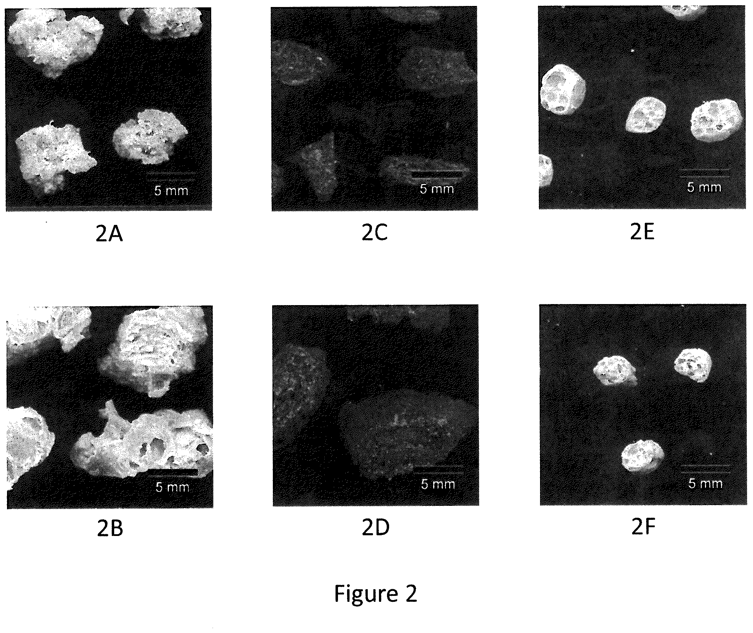

Macroscopic and microscopic images of Sample 16 (Table 1), Sample 5, which contains no added oil (Table 1), two commercially available TVP products, and two commercially available protein (soy) crisps were taken to examine the structure of each sample. The surface of extruded pieces were imaged using an Epson ^{®} V700 (Epson America Inc., California, USA) photographic scanner. Pieces were also sectioned using a razor blade and the interior of pieces were imaged using an Epson V700 photographic scanner. Fig. 1 shows macroscopic images of the surfaces of representative pieces of each sample, while Fig. 2 shows macroscopic images of the interiors of representative pieces of each sample, with 1A and 2A being Sample 16, 1B and 2B being Sample 5, 1C and 2C being a first TVP product, 1D and 2D being a second TVP product, 1E and 2E being a first protein crisp, and IF and 2F being a second protein crisp.

Extruded pieces were prepared for transmitted light microscopy by hydrating pieces from each sample in a refrigerated 50:50 mixture of Tissue-Tek ^{®} O.C.T ^{™} (Sakura Finetek Europe B.V., The Netherlands) and water until the center was hydrated. Once rehydrated, pieces were frozen and then cut into 20 micron sections using a cryostatic microtome. The sections were stained using 0.1% Ponceau 2R, which stains protein red, and an aqueous iodine solution, which stains starch blue. The sections were imaged using an Olympus ^{®} AX70 Microscope light microscope with a 20x objective and Olympus ^{®} DP70 digital camera with a 10X eyepiece (Olympus America Inc., Pennsylvania, USA). Figure 3 compares light micrographs of an example of an extruded piece (Sample 16 from Table 1; Fig. 3A), a piece containing no oil (Sample 5 from Table 1; Fig. 3B), two commercially available TVP products (Figs. 3C and 3D), and two commercially available soy crisps (Figs. 3E and 3F). Sample 16 (Fig. 3A) had relatively large protein granules or agglomerations of non-linearly oriented protein surrounded by protein matrix disruptive ingredient (starch in this example) in a loosely packed structure. This contrasts to Sample 5 (Fig. 3B), which had fibrous, linearly-oriented protein with protein matrix disruptive ingredient dispersed in spaces between protein strands rather than having protein granules within, or surrounded by, a matrix that includes protein matrix disruptive ingredient. Commercially available TVP products (Figs. 3C and 3D) appeared similar in structure to Sample 5, with fibrous, linearly oriented protein and no protein granules. Without being bound to theory, it is believed that the similarity of the monolithic, fibrous, linearly oriented protein structure of the commercially available TVP products to Sample 5 is, in part, due to absence of any significant amount of oil during extrusion. Commercially available soy crisps (Figs. 3E and 3F) showed agglomerations of protein that are smaller and more tightly packed compared to Sample 16 (Fig. 3A).

Extruded pieces were prepared for confocal microscopy by cross-sectioning representative pieces from each sample with a razor blade. Autofluorescence of at the cut surface was imaged using an Olympus Fluoview 1000 confocal microscope with a 4x objective and 425-475 mn, 500-530 nm, and 560-660 nm emission filters after excitation at 405 nm, 488 nm, and 568 nm lasers, respectively. The images in Fig. 4 are z-stacks of 10 micron optical sections, with imaged stacks from each laser overlaid. It was observed that the TVP samples autofluoresced under the 568 nm laser, but the other samples did not. Thus, images for the TVP samples (4C and 4D) include overlays of images obtained using excitation at 405 nm, 488 nm, and 568 nm, while images for Sample 16 (4A), Sample 5 (4B), and commercially available protein crisps (4E and 4F) include overlays of images obtained using excitation at 405 nm and 488 nm.

### Example 2

Extruded pieces including a protein matrix disruptive ingredient comprising insoluble fiber (e.g., oat hull fiber), were produced. Formulations including soy protein isolate (SPI), flour (F), insoluble fiber (IF), sugar (S), oil (O), water (W), and flavor (R) according to Table 3 (SPI, F, IF, S, and R are shown as % weight of dry ingredients and O and W are shown as % weight of protein matrix composition) were combined to form a protein matrix composition, formed, and dried similarly to Example 1.

**Table 3**

| **Sample** | **SPI** | **F** | **IF** | **S** | **R** | **W** | **O** | **SME (Wh/kg)** | **Die temp. (° F) °C** | | **Die press. (PSI)**bar | |
|---|---|---|---|---|---|---|---|---|---|---|---|---|
| 1 | 55.4 | 20.0 | 20.0 | 4.0 | 0.6 | 43.0 | 4.7 | 29.8 | 274 | 133 | 300 | 20.7 |
| 2 | 55.4 | 20.0 | 20.0 | 4.0 | 0.6 | 40.9 | 8.9 | 23.0 | 270 | 132 | 242 | 16.7 |
| 3 | 55.4 | 20.0 | 20.0 | 4.0 | 0.6 | 48.9 | 7.8 | 16.1 | 261 | 127 | 194 | 13.4 |
| 4 | 45.4 | 20.0 | 30.0 | 4.0 | 0.6 | 48.6 | 7.8 | 17.3 | 256 | 124 | 201 | 13.9 |
| 5 | 45.4 | 20.0 | 30.0 | 4.0 | 0.6 | 36.4 | 9.7 | 31.4 | 271 | 133 | 291 | 20.1 |
| 6 | 45.4 | 20.0 | 30.0 | 4.0 | 0.6 | 36.4 | 9.7 | 29.9 | 273 | 134 | 287 | 19.8 |
| 7 | 35.4 | 20.0 | 40.0 | 4.0 | 0.6 | 34.2 | 10.0 | 34.8 | 280 | 138 | 313 | 21.6 |

Extruded pieces surprisingly incorporated the insoluble fiber without compromising the texture or flavor of the pieces. Extruded pieces including relatively high amounts of fiber could be used in various food products, such as granola, RTE cereal, or chewy or crunchy grain bars, to increase protein and/or fiber content while providing an enjoyable eating experience.

### Example 3

Extruded pieces having almond inclusions were produced. Formulations including soy protein isolate (SPI), flour (F), inclusions (I), sugar (S), oil (O), water (W), and flavor (R) according to Table 4 (SPI, F, 1, S, and R are shown as % weight of dry ingredients and O and W are shown as % weight of protein matrix composition) were combined to form a protein matrix composition, formed, and dried similarly to Example 1. It is noted that the amount of oil includes the amount contributed by both the almond inclusions and added oil.

**Table 4**

| **Sample** | **SPI** | **F** | **S** | **R** | **I** | **W** | **O** | **SME (Wh/kg)** | **Die temp.** (° **F)** °C | | **Die press. (PSI)** bar | |
|---|---|---|---|---|---|---|---|---|---|---|---|---|
| 1 | 65.4 | 30.0 | 4.0 | 0.6 | 12.3 | 31.5 | 12.0 | 27.9 | 273 | 134 | 348 | 24.0 |
| 2 | 65.4 | 30.0 | 4.0 | 0.6 | 11.6 | 35.5 | 11.3 | 26.5 | 266 | 130 | 325 | 22.4 |
| 3 | 65.4 | 30.0 | 4.0 | 0.6 | 10.8 | 39.9 | 10.5 | 23.8 | 261 | 127 | 287 | 19.8 |

Extruded pieces had an acceptable texture and macroscopically identifiable almond pieces.

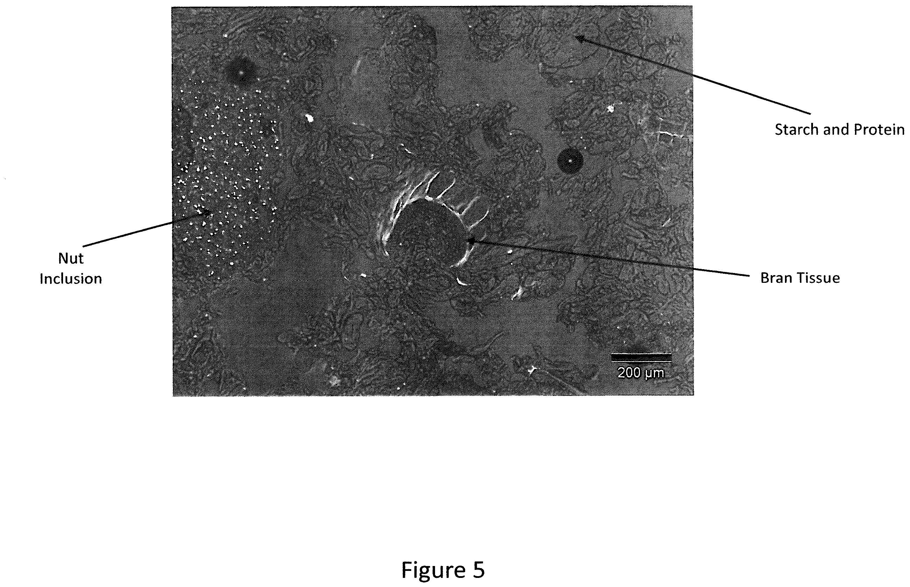

Samples were prepared for polarized light microscopy using the same hydration procedure and equipment as for the light microscopy in Example 1, except the microscope was equipped with polarizing filters and first order red plate, and a 10x objective with a 10x eyepiece. As shown in Fig. 5, polarized light microscopy showed relatively large protein granules of substantially non-linearly oriented protein surrounded by protein matrix disruptive ingredient in a loosely packed structure similar to Sample 16 in Example 1. In addition, nut inclusions and bran are identifiable, as shown in Fig. 5.

### Example 4

Additional extruded pieces were produced that included a powdered protein ingredient comprising a combination of soy protein isolate and whey protein using a protocol similar to Example 1. The extruded pieces had an acceptable texture, but were slightly cripsier than the acceptable samples in Example 1. Extruded pieces comprising whey protein can be used to produce food products where a crispier texture is desired.

Additional samples were also produced using a protocol similar to Example 1 and included a protein matrix disruptive ingredient that comprised apple powder (10% by weight dry ingredients), cinnamon (1.5-2% by weight dry ingredients), or cocoa powder (1.5-2% by weight dry ingredients). The extruded pieces were determined to have an acceptable texture. The samples that included apple flakes had a light color and an apple flavor. The samples that included cocoa were brown in color. Oat flour and rice flour were also tested as protein matrix disruptive ingredients, and both produced acceptable extruded pieces.

Additional inclusions were also tested, including dried cranberry pieces, rolled oats, whole sweet corn, coconut, flax seed, and chia seed. All of the tested inclusions resulted in extruded pieces with macroscopically visible inclusions.

### Example 5

Formulations including soy flour (SF), soy protein concentrate (SPC), soy protein isolate (SPI), grain flour (F), sugar (Su), salt (Sa), oil (O), water (W), and/or flavor (R) according to Table 5 (SF, SPC, SPI, F, Su, Sa, and R are shown as % weight of dry ingredients and O and W are shown as % weight of protein matrix composition) were combined in a Buhler BCTL-42 extruder to form a protein matrix composition. The protein matrix composition was extruded through a single hole die having a diameter of 0.159 inches (4mm) and cut to form protein matrix composition pieces approximately 5 mm to 10 mm. The pieces were dried using tray dryer to a moisture content of about 1.5% to about 8% to form extruded pieces.

**Table 5**

| **Sample** | **SF** | **SPC** | **SPI** | **F** | **Su** | **Sa** | **O** | **w** | **R** | **SME (Wh/ kg)** | **Die temp** (°F) °C | | Die press. (PSI) bar | |
|---|---|---|---|---|---|---|---|---|---|---|---|---|---|---|
| **B1** | **93** | **0** | **0** | **0** | **1** | **1.5** | **4.2** | **43.8** | **4.5** | **31** | 257 | 125 | 164 | 11.3 |
| **B2** | **0** | **64.2** | **0** | **28.8** | **1** | **1.5** | **20.9** | **27.6** | **4.5** | **31** | 264 | 129 | 154 | 10.6 |
| **B3** | **0** | **0** | **53** | **40** | **1** | **1.5** | **8.1** | **30.6** | **4.5** | **45** | 274 | 134 | 261 | 18.0 |
| **B4** | **0** | **86** | **0** | **0** | **2** | **3** | **4.2** | **41.1** | **9** | **39** | 270 | 132 | 350 | 24.1 |
| **B5** | **0** | **0** | **77.2** | **15.8** | **1** | **1.5** | **8.1** | **38.1** | **4.5** | **24** | 261 | 127 | 184 | 12.7 |
| **D1** | **0** | **90.5** | **0** | **0** | **2** | **3** | **4.2** | **39.5** | **4.5** | **38** | 264 | 129 | 363 | 25.0 |
| **D2** | **0** | **90.5** | **0** | **0** | **2** | **3** | **4.2** | **43.8** | **4.5** | **35** | 261 | 127 | 327 | 22.5 |
| **D3** | **0** | **90.5** | **0** | **0** | **2** | **3** | **4.2** | **43.8** | **4.5** | **34** | 275 | 135 | 347 | 23.9 |
| **D4** | **0** | **90.5** | **0** | **0** | **2** | **3** | **8.1** | **49** | **4.5** | **21** | 264 | 129 | 193 | 13.3 |
| **D5** | **0** | **90.5** | **0** | **0** | **2** | **3** | **4.2** | **43.8** | **4.5** | **34** | 263 | 128 | 347 | 23.9' |
| **D6** | **4** | **80** | **0** | **2** | **2** | **3** | **8.1** | **38.1** | **9** | **33** | 263 | 128 | 284 | 17.1 |
| **D7** | **0** | **88.5** | **0** | **0** | **4** | **3** | **4.2** | **43.8** | **4.5** | **33** | 261 | 127 | 346 | 23.9 |

Extruded pieces were mixed into a pasta salad (Betty Crocker^{™} Suddenly Pasta Salad^{™} Ranch and Bacon, General Mills, Inc., Minneapolis, MN, USA) and eaten to determine acceptability of texture for consumption as a bacon bit substitute (Table 6). Briefly, the pasta salad was prepared according to the directions on the package, but replacing the imitation bacon bits with extruded pieces from Table 5 and omitting optional ingredients, and refrigerated for 30 minutes before eating.

Protein and moisture content provided in Table 6 were measured as described in Example 1.

**Table 6**

| **Sample** | **Measured protein (% wt)** | **Moisture (% wt)** | **Texture liking** |
|---|---|---|---|
| **B1** | 44.9 | 5.73 | |
| **B2** | 39.5 | 7.16 | |
| **B3** | 43.9 | 6.36 | |
| **B4** | 59.7 | 2.18 | + |
| **B5** | 62.0 | 4.51 | |
| **D1** | 60.2 | 7.04 | |
| **D2** | 61.8 | 6.09 | |
| **D3** | 59.6 | 9.24 | |
| **D4** | 61.0 | 3.51 | ++ |
| **D5** | 62.0 | 5.36 | |
| **D6** | 57.0 | 4.09 | + |
| **D7** | 60.7 | 4.62 | |

Extruded pieces from samples D1-D7 from Table 5 were subjected to texture analysis according to Example 1. In addition, extruded pieces from all the samples listed in Table 5 were subjected to an alternate texture analysis method. Briefly, extruded pieces from each sample were passed through a 3/8 sieve, with the pieces retained on the 3/8 sieve discarded. The remaining pieces were passed through a #4 sieve. Pieces retained by the #4 sieve were subjected to texture analysis. Multiple extruded pieces from each sample were placed in a trough on the stage of a TA.HD*Plus* Texture Analyzer and subjected to a 50% strain test at a speed of 2 mm/second using a 250 kg load cell and a single rounded blade. The average 50% strain force of 5 replicates was measured in kg. In Table 7, the measured texture analysis values for both methods are provided for samples D1-D7. For samples B1-B5, the measured texture values for the alternate texture analysis method are provided and texture values that correlate to the texture analysis method in Example 1 were calculated and are provided in Table 7. It was determined that acceptable extruded pieces identified in Table 6 had texture analysis values that correlated to from 1000 g to 7400 g force, with texture analysis values around 2000 g to 5000 g force being more preferred.

**Table 7**

| **Sample** | **Ex. 1 Method Texture (measured, in grams)** | **Ex. 1 Method Texture (calculated, in grams)** | **Alt. Method Texture (measured, in kilograms)** |
|---|---|---|---|
| **B1** | | **4890** | **32.6** |
| **B2** | | **9195** | **61.3** |
| **B3** | | **8565** | **57.1** |
| **B4** | | **3855** | **25.7** |
| **B5** | | **3855** | **25.7** |
| **D1** | **2349** | | **21.8** |
| **D2** | **3972** | | **22.8** |
| **D3** | **6208** | | **49.5** |
| **D4** | **2014** | | **11.5** |
| **D5** | **3596** | | **25.8** |
| **D6** | **2280** | | **14.7** |
| **D7** | **4947** | | **23.8** |

Particle density was measured as described in Example 1. The average particle density for acceptable extruded pieces (see, Table 6) ranged from 0.7 g/cc to 1.0 g/cc, with densities from 0.7 g/cc to 0.9 g/cc being more preferred.

Extruded pieces from Table 5 were also tested to determine cold water and hot water hydration rates. In order to determine cold water hydration rate, 20 g of each sample was combined with 200 g water at 19.4 °C (67° F), and allowed to sit at room temperature for 10 minutes. The extruded pieces were then drained for 30 seconds using a strainer and the mass of the drained pieces was measured. The cold water hydration rate was calculated by dividing the mass of the drained extruded pieces divided by the mass of the extruded pieces prior to combination with water (20 g). In order to determine hot water hydration rate, 20 g of each sample was combined with 200 g boiling water, covered, and allowed to sit at room temperature for 5 minutes. The extruded pieces were then drained for 30 seconds using a strainer, and the mass of the drained pieces was measured. The hot water hydration rate was calculated in the same way the cold water hydration rate was calculated. Cold water hydration rates for extruded pieces identified in Table 6 as being acceptable as a bacon bit substitute ranged from 2.1 to 2.7. Hot water hydration rates for extruded pieces identified in Table 6 as being acceptable as a bacon bit substitute ranged from 3.0 to 3.75.

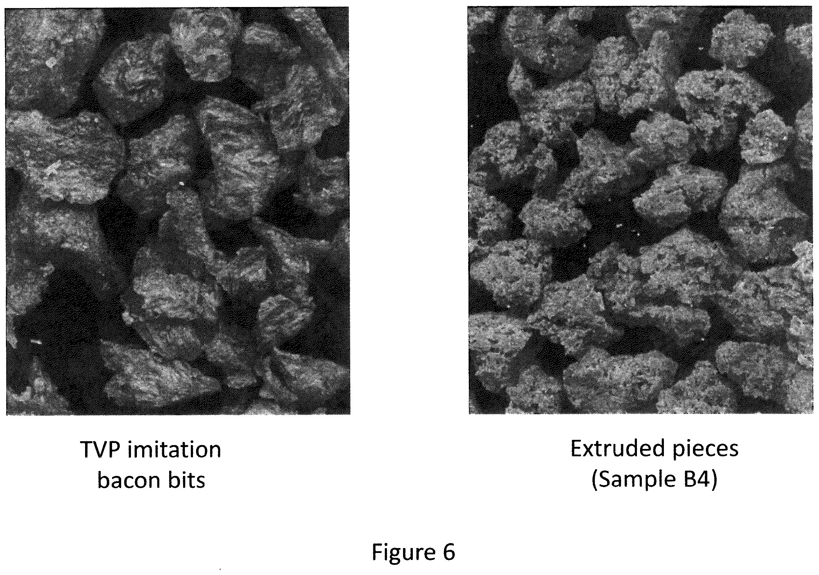

Macroscopic and microscopic images of Samples B4 (Table 5) were taken to examine the structure of each sample and compared to a commercially available textured vegetable protein-based bacon bit (TVP imitation bacon bits). Macroscopic surface images (Fig. 6), and 0.1% Ponceau 2R/aqueous iodine stained sample light micrographs (Fig. 7) were obtained according to the methods described in Example 1. As visible in Fig. 6, the surface of Sample B4 extruded pieces appear rougher and less flat than the TVP imitation bacon bits. Fig. 7 shows that the TVP imitation bacon bits have an aligned, fibrous, linearly-oriented protein structure throughout, while Sample B4 has protein granules with varying degrees of linear orientation surrounded by a matrix including a matrix disruptive ingredient (non-protein components of SPC). The protein matrix within the protein granules is not as long or neatly aligned and linear as the structure throughout the TVP imitation bacon bits. The protein matrix within the protein granules also does not appear fibrous, as does the protein matrix of the TVP imitation bacon bits.

### Example 6

Formulations including soy protein isolate (SPI), grain flour (F), oil (O), water (W), and/or flavor (R) according to Table 8 (SPI, F, and R are shown as % weight of dry ingredients and O and W are shown as % weight of protein matrix composition) were combined in a Buhler BCTL-42 extruder to form a protein matrix composition. The protein matrix composition was extruded through a single hole die having a diameter of 0.159 inches (4 mm) and cut to form protein matrix composition pieces approximately 5 mm to 10 mm. The pieces were dried using tray dryer to a moisture content of 1.5% to 8% to form extruded pieces.

**Table 8**

| **Sample** | **SPI** | **F** | **O** | **W** | **R** | **SME (Wh/kg)** | **Die (° F)** | **temp.** °C | **Die (PSI)** | **press.** bar |
|---|---|---|---|---|---|---|---|---|---|---|
| **V16** | **81.6** | **14.4** | **13** | **48.6** | **4** | **16.6** | **259** | 126 | **103** | 7.1 |
| **V17** | **86.4** | **9.6** | **13** | **48.6** | **4** | **15.6** | **258** | 125 | **96** | 6.6 |

Hamburger Helper Cheeseburger Macaroni (General Mills, Inc.) as well as Hamburger Helper Stroganoff (General Mills, Inc.) were prepared according to the directions on the box, except instead of ground beef, samples from Table 8 were used and additional water was added to account for proper hydration of the extruded pieces. Additional water was added in amounts of half to ¾ of the weight of the added protein pieces. It was observed that the protein pieces hydrated completely during the normal preparation procedure and time. Each of the samples from Table 8 exhibited a texture similar to ground beef upon preparation.

Extruded pieces from Table 8 were also tested to determine cold water and hot water hydration rates as described in Example 5. Cold water hydration rates for extruded pieces from Table 8 ranged from 1.7 to 1.9. Hot water hydration rates for extruded pieces from Table 8 ranged from 2.5 to 2.8.

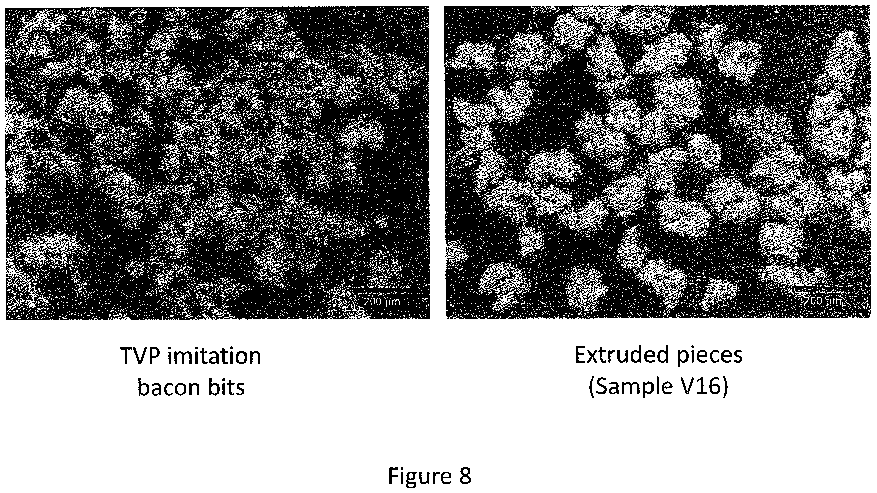

Macroscopic and microscopic images of Sample V16 were taken to examine the structure of each sample and compared to a commercially available textured vegetable protein-based bacon bit (TVP imitation bacon bits). Macroscopic surface images (Fig. 8), and 0.1% Ponceau 2R/aqueous iodine stained sample light micrographs (Fig. 9) were obtained according to the methods described in Example 1. As visible in Fig. 8, the surface of Sample V16 extruded pieces appear rougher and less flat than the TVP imitation bacon bits. Fig. 9 shows that the TVP imitation bacon bits have an aligned, fibrous, linear protein structure throughout, while Sample V16 has protein granules with varying degrees of linear orientation surrounded by a matrix including a matrix disruptive ingredient (grain flour). Starch from the grain flour in sample V16 is stained purple and is visible within the matrix surrounding the protein granules. The protein matrix within the protein granules does not appear to be fibrous or as long and neatly aligned and parallel as the structure throughout the TVP imitation bacon bits.

The implementations described above and other implementations are within the scope of the following claims. One skilled in the art will appreciate that the present disclosure can be practiced with embodiments other than those disclosed. The disclosed embodiments are presented for purposes of illustration and not limitation.

## Claims

1. A composition comprising extruded pieces, the extruded pieces comprising:
a. protein in an amount of 30% to 90% by weight,
b. a protein matrix disruptive ingredient in an amount of from 5% to 50% by weight,
c. oil in an amount of from 2% to 20% by weight,
d. water in an amount of from 1.5% to 8% by weight, and
e. inclusions in an amount of from 0% to 50% by weight
wherein the extruded pieces have a density of from 0.7 g/cc to 1.0 g/cc.

2. The composition of claim 1, wherein the extruded pieces comprise protein granules with an average size greater than 75 µm within a matrix comprising the protein matrix disruptive ingredient.

3. The composition of claim 2, wherein the extruded pieces comprise protein granules that have a substantially non-linearly oriented protein matrix or wherein the extruded pieces comprise protein granules that have regions of linearly oriented protein matrix.

4. The composition of claim 1, wherein the extruded pieces have a texture analysis measurement of from 1000 g to 7400 g force or wherein the extruded pieces have a texture analysis measurement of from 2000 g to 5000 g force, wherein texture analysis measurement refers to an average 50% strain force of 10 replicated measurements in g following the protocol, wherein a single piece is placed on the stage of a texture analyzer and subjected to a 50% strain test at a speed of 2 mm/second using a 50 kg load cell and a 1 inch (2.54 cm) cylindrical stainless steel probe.

5. The composition of claim 1, wherein the oil is substantially uniformly distributed throughout the extruded pieces.

6. The composition of claim 1, wherein the extruded pieces have a density of from 0.8 g/cc to 1.0 g/cc.

7. The composition of claim 1, wherein the extruded pieces comprise inclusions substantially uniformly distributed throughout the extruded pieces.

8. The composition of claim 3, wherein the extruded pieces comprise protein in an amount of 45-70% or 40-65%, and have a cold water hydration rate of from 1.6 to 1.9 or from 2.1 to 2.7, respectively; or wherein the extruded pieces comprise protein in an amount of 45-70% or 40-65%, and have a hot water hydration rate of from 2.0 to 2.8 or from 3.0 to 3.75, respectively.

9. The composition of claim 1, wherein the extruded pieces comprise one or more colorant or flavorant; a sugar-based coating, a fat-based coating, or a protein-based coating.

10. The composition of claim 1 wherein an extruded piece is adhered with one or more edible component to form a cluster, wherein preferably the one or more edible component is one or more additional extruded piece, or wherein an extruded piece is adhered with one or more edible component to form a bar.

11. A method of making a protein product, comprising:
processing, under extrusion conditions, a powdered protein ingredient comprising at least 45% protein by weight of the powdered protein ingredient and a protein matrix disruptive ingredient combined with water and an oil to form a protein matrix composition having a protein content of from 10% to 65% by weight, a moisture content of from 25% to 55% by weight and an oil content of from 1% to 15% by weight, and forming the protein matrix composition into pieces to form the protein product, wherein the extruded pieces have a density of from 0.7 g/cc to 1.0 g/cc.

12. The method of claim 1 1, wherein the protein product has protein granules with an average size greater than 75 µm within a matrix comprising the protein matrix disruptive ingredient.

13. The method of claim 11, wherein the extruded pieces have a density of from 0.8 g/cc to 1.0 g/cc.

14. The method of claim 11, wherein the extrusion conditions comprise a specific mechanical energy (SME) of from 8 Wh/kg to 100 Wh/kg, a die pressure of from 10.3 bar to 69 bar (150 PSI to 1000 PSI), and/or a die temperature of from 93° C to 176.7° C (200° F to 350° F).

15. The method of claim 11, wherein the powdered protein ingredient comprises at least a portion of the protein matrix disruptive ingredient.

16. The method of claim 11, further comprising drying the protein matrix composition pieces to a moisture content of from 1.5% to 8% by weight to form extruded pieces.

17. The method of claim 16, wherein the extruded pieces have a texture analysis measurement of from 1000 g to 7400 g force, wherein texture analysis measurement refers to an average 50% strain force of 10 replicated measurements in g following the protocol, wherein a single piece is placed on the stage of a texture analyzer and subjected to a 50% strain test at a speed of 2 mm/second using a 50 kg load cell and a 1 inch (2.54 cm) cylindrical stainless steel probe.

18. The method of claim 16, further comprising applying a sugar-based or protein-based coating to the extruded pieces to form coated pieces and drying the coated pieces or further comprising applying a fat-based coating to the extruded pieces to form coated pieces and cooling the coated pieces.

19. The method of claim 16, further comprising comminuting the extruded pieces to form particulates and preferably further comprising producing a food product comprising the particulates or coating a food product with the particulates.

20. The method of claim 11, wherein the oil is substantially uniformly distributed throughout the pieces.

21. The method of claim 11, further comprising processing inclusions with the powdered protein ingredient, protein matrix disruptive ingredient, water, and oil.

22. A method of making a food composition, comprising hydrating extruded pieces of the composition of claim 1 to produce hydrated extruded pieces as a first food component of the food product and combining the hydrated extruded pieces with at least a second food component to make the food composition, wherein the food composition is preferably a pasta dish, a salad, a potato dish, or a soup.

23. The method of claim 22, wherein the extruded pieces are formulated to perform as a substitute for bacon bits or as a substitute for ground meat.

## Patentansprüche

1. Eine Zusammensetzung, umfassend extrudierte Stücke, wobei die extrudierten Stücke umfassen:
a. Protein in einer Menge von 30 bis 90 Gew.-%,
b. einen Proteinmatrix disruptiven Bestandteil in einer Menge von 5 bis 50 Gew.-%,
c. Öl in einer Menge von 2 bis 20 Gew.-%,
d. Wasser in einer Menge von 1,5 bis 8 Gew.-% und
e. Einschlüsse in einer Menge von 0 bis 50 Gew.-%
wobei die extrudierten Stücke eine Dichte von 0,7 g/cm³ bis 1,0 g/cm³ aufweisen.

2. Die Zusammensetzung nach Anspruch 1, wobei die extrudierten Stücke Proteinkörnchen mit einer mittleren Größe von mehr als 75 µm innerhalb einer Matrix umfassen, die den Proteinmatrix disruptiven Bestandteil umfasst.

3. Die Zusammensetzung nach Anspruch 2, wobei die extrudierten Stücke Proteinkörnchen umfassen, die eine im Wesentlichen nichtlinear orientierte Proteinmatrix aufweisen, oder wobei die extrudierten Stücke Proteinkörnchen umfassen, die Bereiche mit linear orientierter Proteinmatrix aufweisen.

4. Die Zusammensetzung nach Anspruch 1, wobei die extrudierten Stücke eine Texturanalysemessung von 1000 g bis 7400 g Kraft aufweisen oder wobei die extrudierten Stücke eine Texturanalysemessung von 2000 g bis 5000 g Kraft aufweisen, wobei sich die Texturanalysemessung auf eine mittlere 50%ige Dehnungskraft von 10 wiederholten Messungen in g nach dem Protokoll bezieht, wobei ein einzelnes Stück auf den Tisch eines Texturanalysegeräts gelegt und einem 50%igen Dehnungstest mit einer Geschwindigkeit von 2 mm/Sekunde unter Verwendung einer 50-kg-Kraftmessdose und einer zylindrischen 1 Zoll (2,54 cm)-Edelstahlsonde unterzogen wird.

5. Die Zusammensetzung nach Anspruch 1, wobei das Öl im Wesentlichen gleichmäßig über die extrudierten Stücke verteilt ist.

6. Die Zusammensetzung nach Anspruch 1, wobei die extrudierten Stücke eine Dichte von 0,8 g/cm³ bis 1,0 g/cm³ aufweisen.

7. Die Zusammensetzung nach Anspruch 1, wobei die extrudierten Stücke Einschlüsse umfassen, die im Wesentlichen gleichmäßig über die extrudierten Stücke verteilt sind.

8. Die Zusammensetzung nach Anspruch 3, wobei die extrudierten Stücke Protein in einer Menge von 45-70% oder 40-65% umfassen und eine Kaltwasser-Hydratationsrate von 1,6 bis 1,9 oder von 2,1 bis 2,7 aufweisen; oder wobei die extrudierten Stücke Protein in einer Menge von 45-70% oder 40-65% umfassen und eine Heißwasser-Hydratationsrate von 2,0 bis 2,8 oder von 3,0 bis 3,75 aufweisen.

9. Die Zusammensetzung nach Anspruch 1, wobei die extrudierten Stücke einen oder mehrere Farbstoffe oder Geschmacksstoffe; einen Überzug auf Zuckerbasis, einen Überzug auf Fettbasis oder einen Überzug auf Proteinbasis umfassen.

10. Die Zusammensetzung nach Anspruch 1, wobei ein extrudiertes Stück mit einer oder mehreren essbaren Komponenten verklebt ist, um einen Cluster zu bilden, wobei vorzugsweise die eine oder mehrere essbare Komponente(n) ein oder mehrere zusätzliche(s) extrudierte(s) Stück(e) ist (sind), oder wobei ein extrudiertes Stück mit einer oder mehreren essbaren Komponente(n) verklebt ist, um einen Riegel zu bilden.

11. Ein Verfahren zur Herstellung eines Proteinprodukts, umfassend:
Verarbeiten eines pulverförmigen Proteinbestandteils, der mindestens 45 Gew.-% Protein des pulverförmigen Proteinbestandteils umfasst, und eines Proteinmatrix disruptiven Bestandteils, in Verbindung mit Wasser und einem Öl, unter Extrusionsbedingungen, um eine Proteinmatrixzusammensetzung zu bilden, die einen Proteingehalt von 10 bis 65 Gew.-%, einen Feuchtigkeitsgehalt von 25 bis 55 Gew.-% und einen Ölgehalt von 1 bis 15 Gew.-% aufweist, und Formen der Proteinmatrixzusammensetzung zu Stücken, um das Proteinprodukt zu bilden, wobei die extrudierten Stücke eine Dichte von 0,7 g/cm³ bis 1,0 g/cm³ aufweisen.

12. Das Verfahren nach Anspruch 11, wobei das Proteinprodukt Proteinkörnchen mit einer mittleren Größe von mehr als 75 µm innerhalb einer Matrix aufweist, die den Proteinmatrix disruptiven Bestandteil umfasst.

13. Das Verfahren nach Anspruch 11, wobei die extrudierten Stücke eine Dichte von 0,8 g/cm³ bis 1,0 g/cm³ aufweisen.

14. Das Verfahren nach Anspruch 11, wobei die Extrusionsbedingungen eine spezifische mechanische Energie (SME) von 8 Wh/kg bis 100 Wh/kg, einen Düsendruck von 10,3 bar bis 69 bar (150 PS) bis 1000 PSI) und/oder eine Düsentemperatur von 93°C bis 176,7°C (200°F bis 350°F) umfassen.

15. Das Verfahren nach Anspruch 11, wobei der pulverisierte Proteinbestandteil mindestens einen Teil des Proteinmatrix disruptiven Bestandteils umfasst.

16. Das Verfahren nach Anspruch 11, ferner umfassend das Trocknen der Stücke der Proteinmatrixzusammensetzung auf einen Feuchtigkeitsgehalt von 1,5 bis 8 Gew.-%, um extrudierte Stücke zu bilden.

17. Das Verfahren nach Anspruch 16, wobei die extrudierten Stücke eine Texturanalysemessung von 1000 g bis 7400 g Kraft aufweisen, wobei sich die Texturanalysemessung auf eine mittlere 50%ige Dehnungskraft von 10 wiederholten Messungen in g nach dem Protokoll bezieht, wobei ein einzelnes Stück auf den Tisch eines Texturanalysegeräts gelegt und einem 50%igen Dehnungstest mit einer Geschwindigkeit von 2 mm/Sekunde unter Verwendung einer 50 kg-Kraftmessdose und einer zylindrischen 1 Zoll (2,54 cm)-Edelstahlsonde unterzogen wird.

18. Das Verfahren nach Anspruch 16, ferner umfassend Aufbringen eines Überzugs auf Zuckerbasis oder Proteinbasis auf die extrudierten Stücke, um beschichtete Stücke zu bilden, und Trocknen der beschichteten Stücke, oder ferner umfassend Aufbringen eines Überzugs auf Fettbasis auf die extrudierten Stücke, um beschichtete Stücke zu bilden, und Kühlen der beschichteten Stücke.

19. Das Verfahren nach Anspruch 16, ferner umfassend Zerkleinern der extrudierten Stücke, um Partikel zu bilden, und vorzugsweise ferner umfassend Herstellen eines Lebensmittelprodukts, das die Partikel umfasst, oder Beschichten eines Lebensmittelprodukts mit den Partikeln.

20. Das Verfahren nach Anspruch 11, wobei das Öl im Wesentlichen gleichmäßig in den Stücken verteilt ist.

21. Das Verfahren nach Anspruch 11, ferner umfassend Verarbeiten von Einschlüssen mit dem pulverförmigen Proteinbestandteil, dem Proteinmatrix disruptiven Bestandteil, Wasser und Öl.

22. Ein Verfahren zur Herstellung einer Lebensmittelzusammensetzung, umfassend das Hydratisieren extrudierter Stücke der Zusammensetzung nach Anspruch 1, um hydratisierte extrudierte Stücke als eine erste Lebensmittelkomponente des Lebensmittelprodukts herzustellen, und Vereinigen der hydratisierten extrudierten Stücke mit mindestens einer zweiten Lebensmittelkomponente, um die Lebensmittelzusammensetzung herzustellen, wobei die Lebensmittelzusammensetzung vorzugsweise ein Nudelgericht, ein Salat, ein Kartoffelgericht oder eine Suppe ist.

23. Das Verfahren nach Anspruch 22, wobei die extrudierten Stücke so formuliert sind, dass sie als Ersatz für Speckstücke oder als Ersatz für Hackfleisch dienen.

## Revendications

1. Composition comprenant des morceaux extrudés, les morceaux extrudés comprenant :
a. de la protéine en une quantité de 30 % à 90 % en poids,
b. un ingrédient rompant la matrice protéique en une quantité de 5 % à 50 % en poids,
c. de l'huile en une quantité de 2 % à 20 % en poids,
d. de l'eau en une quantité de 1,5 % à 8 % en poids, et
e. des inclusions en une quantité de 0 % à 50 % en poids,
dans laquelle les morceaux extrudés ont une masse volumique de 0,7 g/cm³ à 1,0 g/cm³.

2. Composition selon la revendication 1, dans laquelle les morceaux extrudés comprennent des granules de protéine ayant une taille moyenne supérieure à 75 µm à l'intérieur d'une matrice comprenant l'ingrédient rompant la matrice protéique.

3. Composition selon la revendication 2, dans laquelle les morceaux extrudés comprennent des granules de protéine qui ont une matrice protéique sensiblement non orientée linéairement, ou dans laquelle les morceaux extrudés comprennent des granules de protéine qui ont des régions de matrice protéique orientée linéairement.

4. Composition selon la revendication 1, dans laquelle les morceaux extrudés ont une mesure d'analyse de texture de 1000 grammes à 7400 grammes force, ou dans laquelle les morceaux extrudés ont une mesure d'analyse de texture de 2000 grammes à 5000 grammes force, dans laquelle la mesure d'analyse de texture se réfère à une force de déformation de 50 % moyenne de 10 mesures répliquées en grammes suivant le protocole dans lequel un seul morceau est placé sur l'étage d'un analyseur de texture et soumis à un test de déformation de 50 % à une vitesse de 2 mm/seconde utilisant une cellule de charge de 50 kg et une sonde en acier inoxydable cylindrique de 2,54 cm (1 pouce).

5. Composition selon la revendication 1, dans laquelle l'huile est distribuée pratiquement uniformément parmi tous les morceaux extrudés.

6. Composition selon la revendication 1, dans laquelle les morceaux extrudés ont une masse volumique de 0,8 g/cm³ à 1,0 g/cm³.

7. Composition selon la revendication 1, dans laquelle les morceaux extrudés comprennent des inclusions distribuées pratiquement uniformément parmi tous les morceaux extrudés.

8. Composition selon la revendication 3, dans laquelle les morceaux extrudés comprennent de la protéine en une quantité de 45 à 70 % ou de 40 à 65 %, et ont un taux d'hydratation par l'eau froide de 1,6 à 1,9 ou de 2,1 à 2,7, respectivement ; ou dans laquelle les morceaux extrudés comprennent de la protéine en une quantité de 45 à 70 % ou de 40 à 65 %, et ont un taux d'hydratation par l'eau chaude de 2,0 à 2,8 ou de 3,0 à 3,75, respectivement.

9. Composition selon la revendication 1, dans laquelle les morceaux extrudés comprennent un ou plusieurs colorants ou aromatisants ; un enrobage à base de sucre, un enrobage à base de matière grasse, ou un enrobage à base de protéine.

10. Composition selon la revendication 1, dans laquelle un morceau extrudé adhère à un ou plusieurs composants comestibles pour former un agglomérat, dans laquelle de préférence le ou les composants comestibles sont un ou plusieurs morceaux extrudés additionnels, ou dans laquelle un morceau extrudé adhère à un ou plusieurs composants comestibles pour former une barre.

11. Méthode de production d'un produit protéique, comprenant le traitement, dans des conditions d'extrusion, d'un ingrédient protéique en poudre comprenant au moins 45 % de protéine en poids de l'ingrédient protéique en poudre et un ingrédient rompant la matrice protéique en combinaison avec de l'eau et une huile pour former une composition de matrice protéique ayant une teneur en protéine de 10 % à 65 % en poids, une teneur en humidité de 25 % à 55 % en poids et une teneur en huile de 1 % à 15 % en poids, et la formation de la composition de matrice protéique en morceaux pour former le produit protéique, dans laquelle les morceaux extrudés ont une masse volumique de 0,7 g/cm³ à 1,0 g/cm³.

12. Méthode selon la revendication 11, dans laquelle le produit protéique a des granules de protéine ayant une taille moyenne supérieure à 75 µm à l'intérieur d'une matrice comprenant l'ingrédient rompant la matrice protéique.

13. Méthode selon la revendication 11, dans laquelle les morceaux extrudés ont une masse volumique de 0,8 g/cm³ à 1,0 g/cm³.

14. Méthode selon la revendication 11, dans laquelle les conditions d'extrusion comprennent une énergie mécanique spécifique (SME) de 8 Wh/kg à 100 Wh/kg, une pression de filière de 10,3 bar à 69 bar (150 psi à 1000 psi), et/ou une température de filière de 93 °C à 176,7 °C (200 °F à 350 °F).

15. Méthode selon la revendication 11, dans laquelle l'ingrédient protéique en poudre comprend au moins une portion de l'ingrédient rompant la matrice protéique.

16. Méthode selon la revendication 11, comprenant en outre le séchage des morceaux de composition de matrice protéique jusqu'à une teneur en humidité de 1,5 % à 8 % en poids pour former des morceaux extrudés.

17. Méthode selon la revendication 16, dans laquelle les morceaux extrudés ont une mesure d'analyse de texture de 1000 grammes à 7400 grammes force, dans laquelle la mesure d'analyse de texture se réfère à une force de déformation de 50 % moyenne de 10 mesures répliquées en grammes suivant le protocole dans lequel un seul morceau est placé sur l'étage d'un analyseur de texture et soumis à un test de déformation de 50 % à une vitesse de 2 mm/seconde utilisant une cellule de charge de 50 kg et une sonde en acier inoxydable cylindrique de 2,54 cm (1 pouce).

18. Méthode selon la revendication 16, comprenant en outre l'application d'un enrobage à base de sucre ou à base de protéine sur les morceaux extrudés pour former des morceaux enrobés, et le séchage des morceaux enrobés, ou comprenant en outre l'application d'un enrobage à base de matière grasse sur les morceaux extrudés pour former des morceaux enrobés, et le refroidissement des morceaux enrobés.

19. Méthode selon la revendication 16, comprenant en outre la fragmentation des morceaux extrudés pour former des particules, et de préférence comprenant en outre la production d'un produit alimentaire comprenant les particules, ou l'enrobage d'un produit alimentaire avec les particules.

20. Méthode selon la revendication 11, dans laquelle l'huile est distribuée pratiquement uniformément parmi tous les morceaux.

21. Méthode selon la revendication 11, comprenant en outre le traitement d'inclusions avec l'ingrédient protéique en poudre, l'ingrédient rompant la matrice protéique, de l'eau, et de l'huile.

22. Méthode de production d'une composition alimentaire, comprenant l'hydratation de morceaux extrudés de la composition de la revendication 1 pour produire des morceaux extrudés hydratés en tant que premier composant alimentaire du produit alimentaire, et la combinaison des morceaux extrudés hydratés avec au moins un deuxième composant alimentaire pour produire la composition alimentaire, dans laquelle la composition alimentaire est de préférence un plat de pâtes, une salade, un plat de pommes de terre, ou une soupe.

23. Méthode selon la revendication 22, dans laquelle les morceaux extrudés sont formulés pour se comporter comme un substitut de lardons ou comme un substitut de viande hachée.
